(19) Europäisches Patentamt / European Patent Office / Office européen des brevets

(11) **EP 1 438 342 B1**

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(21) Anmeldenummer: **02781210.6**

(22) Anmeldetag: **04.10.2002**

(51) Int Cl.:
**C08F 2/50** (2006.01)

(86) Internationale Anmeldenummer:
**PCT/EP2002/011109**

(87) Internationale Veröffentlichungsnummer:
**WO 2003/033544 (24.04.2003 Gazette 2003/17)**

(54) **COPOLYMERISIERBARE PHOTOINITIATOREN FÜER UV-VERNETZBARE KLEBSTOFFE**

COPOLYMERIZABLE PHOTOINITIATORS FOR UV-CROSSLINKABLE ADHESIVES

PHOTOAMORCEURS COPOLYMERISABLES POUR COLLES RETICULABLES PAR UV

(84) Benannte Vertragsstaaten:
**AT BE BG CH CY CZ DE DK EE ES FI FR GB GR IE IT LI LU MC NL PT SE SK TR**

(30) Priorität: **16.10.2001 DE 10150486**

(43) Veröffentlichungstag der Anmeldung:
**21.07.2004 Patentblatt 2004/30**

(73) Patentinhaber: **BASF Aktiengesellschaft**
**67056 Ludwigshafen (DE)**

(72) Erfinder:
- **BALZER, Volf-Dieter**
  **67227 Frankenthal (DE)**
- **ERHARDT, Ulrich**
  **68526 Ladenburg (DE)**
- **LADENBERGER, Volker**
  **68723 Schwetzingen (DE)**
- **MEYER, Harald**
  **67157 Wachenheim (DE)**

- **BRUCHMANN, Bernd**
  **67251 Freinsheim (DE)**
- **SCHUMACHER, Karl-Heinz**
  **67433 Neustadt (DE)**

(56) Entgegenhaltungen:
EP-A- 0 346 788          EP-A- 0 377 199
WO-A-95/04760          WO-A-96/20919
US-A- 4 224 454

- **PATENT ABSTRACTS OF JAPAN vol. 013, no. 556 (C-664), 11. Dezember 1989 (1989-12-11) & JP 01 230603 A (MITSUBISHI RAYON CO LTD), 14. September 1989 (1989-09-14)**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Herstellung von UV-vernetzbaren Copolymerisaten, welches dadurch gekennzeichnet ist, dass ein Gemisch ethylenisch ungesättigter Monomerer, welches 0,01 bis 10 Gew.-% radikalisch copolymerisierbare Phenonderivate enthält, welche durch Umsetzung von

a) Acryl- oder Methacrylverbindungen, welche mindestens eine mit Isocyanat reaktive Gruppe aufweisen [Verbindungen a)] mit

b) Verbindungen, welche mindestens zwei Isocyanatgruppen aufweisen [Verbindungen b)] und

c) Verbindungen c) der allgemeinen Formel (VI)

$$A\text{-}C(=O)\text{-}B\text{-}D \qquad (VI),$$

in der die Substituenten folgende Bedeutung haben:

A   $C_1$- bis $C_3$-Alkyl, gegebenenfalls mit 1, 2 oder 3 Halogenen, $C_1$- bis $C_6$-Alkyl-, Ester- oder Alkoxygruppen substituiertes $C_6$- bis $C_{10}$-Aryl sowie Aralkyl mit 6 bis 10 C-Atomen im Arylteil und 1 bis 6 C-Atomen im Alkylteil,

B   $C_6$- bis $C_{10}$-Arylen, welches gegebenenfalls durch 1, 2 oder 3 Halogene, $C_1$- bis $C_6$-Alkyl-, Ester- oder Alkoxygruppen substituiert ist und

D   $-NH_2$, $-NHR^3$, $-OH$, $-SH$ oder ein Strukturelement $-X\text{-}R^2(-Y)_\pi$, mit der unter Formel (I) angegebenen Bedeutung,

erhalten werden, unter Verwendung eines Polymerisationsinitiators radikalisch polymerisiert wird.

Weiterhin betrifft die Erfindung Copolymerisate, welche nach dem erfindungsgemäßen Verfahren erhalten werden sowie die Verwendung der Copolymerisate in UV-vernetzbaren Massen, beispielsweise als Klebstoff, insbesondere Schmelzhaftklebstoff.

UV-vernetzbare Klebstoffe, welche Photoinitiatoren in einpolymerisierter Form enthalten, sind beispielsweise aus den Schriften DE-A 2411169 und EP-A 246848 bekannt.

Copolymerisierbare Photoinitiatoren sollen in einfacher Weise herstellbar und gut copolymerisierbar sein und die Photoinitiatoren enthaltenden Copolymerisate sollen bei ihrer Verwendung gute anwendungstechnische Eigenschaften, insbesondere hohe Kohäsion und Adhäsion bei deren Verwendung als Klebstoff, aufweisen.

Aufgabe der vorliegenden Erfindung war die Bereitstellung eines neuen Verfahrens zur Herstellung von UV-vernetzbaren Copolymerisaten, welche bei ihrer Verwendung als Klebstoff verbesserte Kohäsion und Adhäsion aufweisen.

Demgemäss wurde das eingangs definierte Verfahren gefunden.

Bei den Verbindungen a) handelt es sich beispielsweise um Acryl- oder Methacrylverbindungen der allgemeinen Formel (I)

$$H_2C=CR^1\text{-}C(=O)\text{-}X\text{-}R^2(-Y)_\pi \qquad (I),$$

in der die Substituenten und Indizes folgende Bedeutung haben:

$R^1$   $-H$, $-CH_3$,
X   $-O-$, $-NH-$, $-NR^3-$ oder $-S-$, bevorzugt $-O-$,
$R^3$   lineares oder verzweigtes $C_1$- bis $C_6$-Alkyl,
$R^2$   ($\pi$+1)-bindige,
gegebenenfalls substituierte lineare oder verzweigte $C_1$- bis $C_{12}$-Alkylgruppe, bevorzugt $C_2$- bis $C_8$-Alkylgruppe, oder gegebenenfalls substituierte $C_3$- bis $C_{12}$-Cycloalkylgruppe, bevorzugt $C_5$- und $C_6$-Cycloalkylgruppe, oder gegebenenfalls substituierte $C_6$- bis $C_{10}$-Arylgruppe, bevorzugt Phenylgruppe,
Y   $-OH$, $-NH_2$, $-NHR^3$ oder $-SH$, bevorzugt $-OH$,
$\pi$   Zahl von 1 bis 5, bevorzugt 1.

In Formel (I) kann das Strukturelement $-R^2(-Y)_\pi$ aber auch eine Gruppe der allgemeinen Formel (II), (III) oder (IV)

$$-(EO)_k\text{-}(PO)_l\text{-}H \qquad (II),$$

$$-(PO)_l\text{-}(EO)_k\text{-}H \qquad (III),$$

$$-(EO_k/PO_l)-H \qquad (IV)$$

sein, wobei EO für eine $-CH_2-CH_2-O$-Gruppe,

PO für eine $-CH_2-CH(CH_3)-O-$ oder eine $-CH(CH_3)-CH_2-O$-Gruppe steht und k und l für Zahlenwerte von 0 bis 15, häufig von 0 bis 10 und oft von 0 bis 5 stehen, wobei aber k und l nicht gleichzeitig 0 sind. Häufig steht entweder k oder l für einen Zahlenwert von 1, 2, 3 oder 4 und oft für einen Zahlenwert von 1.

Weiterhin sollen in

Formel (II) und (III)    $(EO)_k$ ein Block aus k $-CH_2-CH_2-O$-Gruppen, und
$(PO)_l$ ein Block aus 1 $-CH_2-CH(CH_3)-O-$ oder $-CH(CH_3)-CH_2-O$-Gruppen, und

Formel (IV)    $(EO_k/PO_l)$ ein Gemisch aus k $-CH_2-CH_2-O$-Gruppen und
l $-CH_2-CH(CH_3)-O-$ oder $-CH(CH_3)-CH_2-O$-Gruppen in statistischer Verteilung

bedeuten.

Von Bedeutung ist, dass in den Formeln (II), (III) oder (IV) entweder EO oder PO durch BO ersetzt sein kann, wobei BO für eine $-CH_2-CH(C_2H_5)-O-$ oder eine $-CH(C_2H_5)-CH_2-O$-Gruppe sowie für eine $-CH_2-C(CH_3)_2-O-$ oder eine $-C(CH_3)_2-CH_2-O$-Gruppe steht.

Unter linearem oder verzweigtem $C_1$- bis $C_6$-Alkyl versteht man lineare oder verzweigte Alkylreste mit 1 bis 6 Kohlenstoffatomen, beispielsweise Methyl, Ethyl, n-Propyl, iso-Propyl, n-Butyl, sec-Butyl, iso-Butyl, tert.-Butyl, n-Pentyl, iso-Pentyl, tert.-Pentyl oder n-Hexyl, iso-Hexyl, tert.-Hexyl.

Unter einer $(\pi+1)$-bindigen, linearen oder verzweigten $C_1$- bis $C_{12}$-Alkylgruppe sollen Alkylgruppen verstanden werden, welche sich beispielsweise von Methyl, Ethyl, Propyl, 2-Methylpropyl, 2,2-Dimethylpropyl, n-Butyl und seine Isomeren, n-Pentyl und seine Isomeren, n-Hexyl und seine Isomeren, n-Heptyl und seine Isomeren, n-Octyl und seine Isomeren, n-Nonyl und seine Isomeren, n-Decyl und seine Isomeren, n-Undecyl und seine Isomeren oder n-Dodecyl und seine Isomeren ableiten. Selbstverständlich können die vorgenannten Alkylgruppen auch mit weiteren 1, 2 oder 3 funktionellen Gruppen, wie beispielsweise mit Halogenen, wie Fluor, Chlor oder Brom, oder Alkoxygruppen, wie die Methoxy-, Ethoxy- oder Butoxygruppen, substituiert sein; wobei sich in diesen Fällen die Bindigkeit der Alkylgruppen um die Zahl dieser Substituenten erhöht.

Unter $(\pi+1)$-bindigen $C_3$- bis $C_{12}$-Cycloalkylgruppen sollen $(\pi+1)$-bindige Cycloalkylgruppen verstanden werden, die sich beispielsweise von Cyclopropyl, Cyclobutyl, Cyclopentyl, Cyclohexyl, Cycloheptyl, Cyclooctyl, Cyclononyl oder Cyclodecyl ableiten. Weiterhin sollen darunter auch bicyclische Verbindungen verstanden werden, die sich von Bicyclohexan, Bicycloheptan, Bicyclooctan, Bicyclononan, Bicyclodecan, Bicycloundecan oder Bicyclododecan ableiten. Selbstverständlich können die vorgenannten Cycloalkylgruppen auch mit weiteren 1, 2 oder 3 funktionellen Gruppen, wie beispielsweise mit $C_1$- bis $C_6$-Alkylgruppen, Halogenen oder Alkoxygruppen substituiert sein, wobei sich in diesen Fällen die Bindigkeit der Cycloalkylgruppen um die Zahl dieser Substituenten erhöht. Häufig finden 1,2-Cyclopropylen-, 1,2- oder 1,3-Cyclobutylen-, 1,2- oder 1,3-Cyclopentylen-, 1,2-, 1,3- oder 1,4-Cyclohexylen-, 1,2-, 1,3- oder 1,4-Cycloheptylen-, Bicyclooctylen-, Bicyclononylen-, Bicyclodecylen und Bicycloundecylengruppen Verwendung.

Als $(\pi+1)$-bindige $C_6$- bis $C_{10}$-Arylgruppen werden $(\pi+1)$-bindige Arylgruppen verstanden, die sich von der Phenyl- oder der Naphthylgruppe ableiten. Selbstverständlich können die vorgenannten Arylgruppen auch mit weiteren 1, 2 oder 3 Substituenten, wie beispielsweise mit $C_1$- bis $C_6$-Alkylgruppen, Halogenen, oder Alkoxygruppen substituiert sein, wobei sich in diesen Fällen die Bindigkeit der Arylgruppen um die Zahl dieser Substituenten erhöht. Häufig finden insbesondere 1,3- und 1,4-Phenylen-, 1,3-, 1,4-, 1,5- und 2,6-Naphthylengruppen Verwendung.

Wesentlich ist, dass die vorgenannten Gruppen $R^2$ Mit $\pi$ Y-Gruppen substituiert sind. Dabei ist $\pi$ eine Zahl von 1 bis 5, beispielsweise 1, 2, 3, 4 oder 5, insbesondere jedoch 1.

Als Verbindungen a) werden insbesondere eingesetzt: 2-Hydroxyethylacrylat und -methacrylat, 2-Hydroxy-2-methylethylacrylat und -methacrylat, 3-Hydroxypropylacrylat und -methacrylat, 2-Hydroxy-2-ethylethylacrylat und -methacrylat, 4-Hydroxybutylacrylat und -methacrylat, ferner Neopentylglykolmonoacrylat- und -methacrylat, Glycerin-monoacrylat und -methacrylat, Trimethylolpropan-monoacrylat und -methacrylat, Pentaerythrit-monoacrylat und -methacrylat, N-Hydroxymethylacrylamid und -methacrylamid, N-Hydroxyethylacrylamid und -methacrylamid, 5-Hydroxy-3-oxo-pentylacrylamid und -methacrylamid, N-Hydroxymethylcrotonamid oder N-Hydroxyethylmaleinimid. Insbesondere bevorzugt werden 2-Hydroxyethylacrylat und -methacrylat, 3-Hydroxypropylacrylat und 4-Hydroxybutylacrylat und -methacrylat.

Die Verbindungen b) mit mindestens 2 Isocyanatgruppen weisen in der Regel die Struktur der allgemeinen Formel (V) auf

$$Q(-NCO)_\lambda \qquad (V).$$

Dabei soll Q in Formel (V) beispielsweise

- eine lineare oder verzweigte $C_3$- bis $C_{16}$-Alkanverbindung, beispielsweise Propan, 2-Methylpropan, 2,2-Dimethylpropan, n-Butan und seine Isomeren, n-Pentan und seine Isomeren, n-Hexan und seine Isomeren, n-Heptan und seine Isomeren, n-Octan und seine Isomeren, n-Nonan und seine Isomeren, n-Decan und seine Isomeren, n-Undecan und seine Isomeren, n-Dodecan und seine Isomeren, n-Tridecan und seine Isomeren, n- Tetradecan und seine Isomeren, n-Pentadecan und seine Isomeren sowie n-Hexadecan und seine Isomeren, bevorzugt eine $C_6$- bis $C_{13}$-Alkanverbindung, welche gegebenenfalls durch 1, 2 oder 3 Halogene, Oxo-, Ester- oder Alkoxygruppen substituiert ist, oder
- eine $C_6$- bis $C_{14}$-aromatische Verbindung, beispielsweise Benzol, Diphenylmethan, Naphthalin, Phenanthren, bevorzugt Benzol und Diphenylmethan, welche gegebenenfalls durch 1, 2 oder 3 Halogene, $C_1$- bis $C_6$-Alkyl-, Oxo-, Ester- oder Alkoxygruppen substituiert sein kann, oder
- eine $C_3$- bis $C_{16}$-Cycloalkanverbindung, beispielsweise Cyclopropan, Cyclobutan, Cyclopentan, Cyclohexan, Cycloheptan, Cyclooctan, Bicyclooctan, Bicyclononan, Bicyclodecan, Bicycloundecan, Bicyclododecan, Bis(cyclohexyl)methan, bevorzugt eine Cyclopentan, Cyclohexan, Bis(cyclohexyl)methan, welche gegebenenfalls durch 1, 2 oder 3 Halogene, $C_1$- bis $C_6$-Alkyl-, Oxo-, Ester- oder Alkoxygruppen substituiert sein kann, oder
- eine Arylalkylverbindung mit 6 bis 10 C-Atomen im Arylteil und 1 bis 6, bevorzugt 1 bis 4 C-Atomen im Alkylteil, welche gegebenenfalls weiterhin durch 1, 2 oder 3 Halogene, Oxo-, Ester- oder Alkoxygruppen substituiert sein kann,

bedeuten, welche mit $\lambda$ Isocyanatgruppen (-NCO) substituiert ist, wobei $\lambda$ als mittlere Funktionalität eine Zahl $\geq 2$, oft eine Zahl von 2 bis 6 und häufig eine Zahl von 2 bis 4 ist. Insbesondere ist $\lambda$ gleich 2.

Beispiele für Verbindungen der allgemeinen Struktur (V) sind die aus dem Stand der Technik bekannten aliphatischen, cycloaliphatischen und aromatischen Isocyanate. Bevorzugte Di- oder Polyisocyanate sind 4,4'-Diphenylmethandiisocyanat, die Mischungen aus monomeren Diphenylmethandiisocyanaten und oligmeren Diphenylmethandiisocyanaten (Polymer-MDI), Tetramethylendiisocyanat, Tetramethylendiisocyanat-Trimere, Hexamethylendiisocyanat, Hexamethylendiisocyanat-Trimere, Isophorondiisocyanat-Trimer, 4,4'-Methylenbis(cyclohexyl)-diisocyanat, Xylylendiisocyanat, Tetramethylxylylendiisocyanat, 1,3- und 1,4-Bis(isocyanatomethyl)cyclohexan, Dodecyldiisocyanat, Lysinalkylester-diisocyanat, wobei Alkyl für $C_1$ bis $C_{10}$ steht, 2,2,4- oder 2,4,4-Trimethyl-1,6-hexamethylen-diisocyanat, 1,4-Diisocyanatocyclohexan oder 4-Isocyanatomethyl-1,8-octamethylendiisocyanat.

Besonders bevorzugt sind Di- oder Polyisocyanate mit Isocyanatgruppen unterschiedlicher Reaktivität, wie 2,4-Toluylendiisocyanat (2,4-TDI), 2,4'-Diphenylmethandiisocyanat (2,4'-MDI), Triisocyanatotoluol, Isophorondiisocyanat (IPDI), 2-Butyl-2-ethylpentamethylendiisocyanat, 2-Isocyanatopropylcyclohexylisocyanat, 3(4)-Isocyanatomethyl-1-methylcyclohexyl-isocyanat, 1,4-Diiso-cyanato-4-methylpentan, 2,4'-Methylenbis(cyclohexyl)diisocyanat und 4-Methyl-cyclohexan-1,3-diisocyanat (H-TDI).

Weiterhin sind Isocyanate besonders bevorzugt, deren Isocyanatgruppen zunächst gleich reaktiv sind, bei denen sich jedoch durch Erstaddition eines Alkohols, Thioalkohols oder Amins an einer Isocyanatgruppe ein Reaktivitätsabfall bei der zweiten Isocyanatgruppe induzieren läßt. Beispiele dafür sind Isocyanate, deren Isocyanatgruppen über ein delokalisiertes Elektronensystem gekoppelt sind, z.B. 1,3- und 1,4-Phenylendiisocyanat, 1,5-Naphthylendiisocyanat, Diphenyldüsocyanat, Tolidindiisocyanat oder 2,6-Toluylendiisocyanat.

Von Bedeutung ist weiterhin, dass als Verbindungen der allgemeinen Formel (V) auch solche Di- und Polyisocyanatverbindungen in Frage kommen, die sich aus den genannten Di- oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen.

Die erfindungsgemäß verwendeten Verbindungen c) weisen eine Struktur gemäß der allgemeinen Formel (VI) auf

$$A\text{-}C(=O)\text{-}B\text{-}D \qquad (VI),$$

worin

A    $C_1$- bis $C_3$-Alkyl, wie Methyl, Ethyl, n-Propyl oder iso-Propyl, gegebenenfalls mit 1, 2 oder 3 Halogenen, $C_1$- bis $C_6$-Alkyl-, Ester- oder Alkoxygruppen substituiertes $C_6$- bis $C_{10}$-Aryl, beispielsweise Phenyl oder Naphthyl, sowie Aralkyl mit 6 bis 10 C-Atomen im Arylteil und 1 bis 6 C-Atomen im Alkylteil, beispielsweise Benzyl,

B    $C_6$- bis $C_{10}$-Arylen, wie beispielsweise 1,2-, 1,3- und 1,4-Phenylen, 1,2-, 1,3-, 1,4-, 1,5-, 2,6-Naphthylen, welches gegebenenfalls durch 1, 2 oder 3 Halogene, $C_1$- bis $C_6$-Alkyl-, Ester- oder Alkoxygruppen substituiert ist und

D    $-NH_2$, $-NHR^3$, $-OH$, $-SH$ oder ein Strukturelement $-X\text{-}R^2(-Y)_\pi$, mit der unter Formel (I) angegebenen Bedeutung,

bedeuten.

Als Phenonderivate gemäß der allgemeinen Formel (VI) können beispielsweise 2-, 3- oder 4-Hydroxyacetophenon, 2-, 3- oder 4-Hydroxypropiophenon, 2-, 3- oder 4-(2-Hydroxyethoxy)acetophenon, 2-, 3- oder 4-Aminoacetophenon, 2-, 3- oder 4-Aminopropiophenon, 2-, 3- oder 4-Hydroxybenzophenon, 2-Hydroxy-5-methylbenzophenon, 5-Chlor-2-hydroxybenzophenon, 2-Hydroxy-4-methylbenzophenon, 2-, 3- oder 4-(2-Hydroxyethoxy)benzophenon, 4-Hydroxy-4'-methoxybenzophenon, 2-, 3- oder 4-Aminobenzophenon, 2, 3- oder 4-Anilinobenzophenon, 2-Amino-4-methylbenzophenon, 2-Amino-4'-methylbenzophenon, 2-Amino-4'-chlorbenzophenon oder 2-Amino-5-chlorbenzophenon eingesetzt werden.

Insbesondere bevorzugt werden 2- oder 4-Hydroxyacetophenon, 2- oder 4-Hydroxypropiophenon, 2- oder 4-(2-Hydroxyethoxy)acetophenon, 2- oder 4-Aminoacetophenon, 2- oder 4-Aminopropiophenon, 2- oder 4-Hydroxybenzophenon, 2- oder 4-(2-Hydroxyethoxy)benzophenon sowie 2- oder 4-Aminobenzophenon eingesetzt.

Die Herstellung der copolymerisierbaren Phenonderivate erfolgt üblicherweise dergestalt, dass wenigstens eine Verbindung b), häufig unter Mitverwendung eines organischen Lösungsmittels, unter Inertgasatmosphäre, vorzugsweise unter Stickstoff, in einem Reaktionsgefäß vorgelegt und unter Rühren auf Reaktionstemperatur gebracht wird. Anschließend gibt man bei Reaktionstemperatur wenigstens eine Verbindung a) kontinuierlich oder diskontinuierlich zu. Die Menge an Verbindung a) ist abhängig von der Anzahl $\pi$ der mit Isocyanat reaktiven Gruppen und wird üblicherweise so gewählt, dass das Verhältnis der Molzahl von Verbindung b) zum Produkt aus Molzahl der Verbindung a) und der Zahl $\pi$ 0,8 zu 1 bis 1 zu 0,8 oder 0,9 zu 1 bis 1 zu 0,9 oder 0,95 zu 1 bis 1 zu 0,95 beträgt. Weist die Verbindung a) beispielsweise nur eine mit Isocyanat reaktive Gruppe Y auf ($\pi$ = 1), werden pro Mol an Verbindung b) $\geq$ 0,8 Mol, $\geq$ 0,9 Mol oder $\geq$ 0,95 Mol und $\leq$ 1,05 Mol, $\leq$ 1,11 Mol oder $\leq$ 1,25 Mol an Verbindung a) eingesetzt. Besitzt Verbindung jedoch beispielsweise zwei mit Isocyanat reaktive Gruppen Y ($\pi$ = 2), so werden pro Mol an Verbindung b) $\geq$ 0,4 Mol, $\geq$ 0,45 Mol oder $\geq$ 0,48 Mol und $\leq$ 0,53 Mol, $\leq$ 0,56 Mol oder $\leq$ 0,63 Mol an Verbindung a) eingesetzt.

Die Reaktionszeit wird in der Regel so bemessen, dass Verbindung a) vollständig mit Verbindung b) umgesetzt wird. Üblicherweise wird daher während der Reaktion von Verbindung a) und Verbindung b) der Isocyanatgruppengehalt des Reaktionsgemisches verfolgt, welcher nach Abreaktion von Verbindung a) konstant bleibt. Die Bestimmung des Isocyanatgruppengehaltes ist dem Fachmann geläufig und erfolgt üblicherweise durch Zugabe eines bezogen auf Isocyanatgruppen überschüssigen Amins und Rücktitration der nicht verbrauchten Aminogruppen mit verdünnter Salzsäure gemäß DIN 53 185.

Die vorgenannte Umsetzung gelingt vorteilhaft in Anwesenheit eines Katalysators, der in Mengen von 0,0001 bis 1 Gew.-%, insbesondere von 0,001 bis 0,1 Gew.-%, jeweils bezogen auf die Menge an Isocyanatverbindung b), eingesetzt wird. Als Katalysatoren kommen metallorganische Verbindungen, speziell Zinn-, Zink-, Bismut- oder Zirkonorganische Verbindungen in Betracht. Besonders bevorzugt wird Dibutylzinndilaurat eingesetzt. Weiterhin können starke Basen, vorzugsweise stickstoffhaltige Verbindungen, wie Tributylamin, Chinnuclidin, Diazabicyclooctan, Diazabicyclononan oder Diazabicycloundecan eingesetzt werden.

Als geeignetes Lösungsmittel kann ein wasserfreies organisches Lösungsmittel, wie beispielsweise Aceton, 2-Butanon, Essigsäureethylester, Essigsäurebutylester, Tetrahydrofuran, Dioxan, Benzol, Toluol, Xylol, Ethylbenzol, Chlorbenzol, Dichlorbenzol, Dimethylformamid, Dimethylacetamid oder N-Methylpyrrolidon verwendet werden. Insbesondere finden Aceton, 2-Butanon, Tetrahydrofuran, Essigester oder Chlorbenzol Verwendung.

Die Reaktionstemperatur beträgt üblicherweise 0 bis 120 °C, bevorzugt 20 bis 100 °C und insbesondere bevorzugt 25 bis 90 °C. Die Reaktion erfolgt sowohl bei Atmosphärendruck als auch bei einem Druck oberhalb des Atmosphärendrucks, beispielsweise bei einem Druck von $\geq$ 0,1 bar, $\geq$ 0,5 bar, $\geq$ 2 bar oder $\geq$ 5 bar. Selbstverständlich kann die Reaktion, abhängig vom Siedepunkt des gegebenenfalls mitverwendeten Lösungsmittels, auch bei einem Druck unterhalb des Atmosphärendrucks erfolgen.

In einer nachfolgenden zweiten Reaktionsstufe wird dem aus der vorgenannten Umsetzung der Verbindungen a) und b) erhaltenen Reaktionsgemisch bei Reaktionstemperatur Verbindung c) kontinuierlich oder diskontinuierlich zugegeben. Die Menge an Verbindung c) ist abhängig von ihrer Anzahl an mit Isocyanat reaktiven Gruppen und der Anzahl der noch freien Isocyanatgruppen von Verbindung b). Sie wird üblicherweise so bemessen, dass die Isocyanatgruppen von Verbindung b) vollständig umgesetzt werden und diese titrimetrisch gemäß DIN 53 185 nicht mehr nachgewiesen werden können. Dies ist üblicherweise der Fall, wenn der Isocyanatgehalt des Reaktionsgemisches $\leq$ 0,1 Gew.-% Isocyanatgruppen, entsprechend der Nachweisgrenze der Titration, ist.

Selbstverständlich ist es auch möglich, dass Verbindung b) zuerst mit Verbindung c) und anschließend mit Verbindung a) oder dass Verbindung b) gleichzeitig mit Verbindung a) und Verbindung c) umgesetzt wird. Von Bedeutung ist jedoch, dass die Umsetzungen so geführt werden, dass sich nach den Zugaben der Verbindungen a) und c) im Reaktionsgemisch kein Isocyanat mehr nachweisen lässt.

Bevorzugt wird jedoch Verbindung b) zuerst mit Verbindung a) und daran anschließend mit Verbindung c) umgesetzt.

Die erhaltenen Reaktionsgemische enthalten als Produkte copolymerisierbare Phenonderivate der allgemeinen Formel (VII)

$$[\mathrm{H_2C{=}CR^1\text{-}C(=O)\text{-}X\text{-}R^2\{\text{-}Y'\text{-}C(=O)\text{-}NH\}_\pi]_\phi\text{-}Q\text{-}[NH\text{-}C(=O)\text{-}D'\text{-}B\text{-}C(=O)\text{-}A]_{\{\lambda\text{-}\Psi\}}} \qquad (VII),$$

worin $R^1$, X, $R^2$, $\pi$, Q, $\lambda$, B und A die in den Formeln (I), (V) und (VI) angegebenen Bedeutungen haben und

$\phi$     für eine Zahl $\Psi \geq 0{,}8$, $\geq 0{,}9$ oder $\geq 0{,}95$ und $\leq 1{,}05$, $\leq 1{,}11$ oder $\leq 1{,}25$ jeweils dividiert durch den Wert von $\pi$,

Y'     für eine Gruppe Y in der deprotonierten Form (-O-, -NH-, -NR$^3$-, -S-) und

D'     für eine Gruppe D in der deprotonierten Form [-O-, -NH-, -NR$^3$-, -S- und -X-R$^2$(-Y')$_\pi$]

stehen. Insbesondere steht für $\pi$, $\Psi$ und $\phi$ ein Zahlenwert von 1.

Bevorzugt werden als copolymerisierbare Phenonderivate Verbindungen gemäß Formel (VII), mit

$R^1$ gleich -H, X und Y' gleich -O-, $R^2$ gleich Ethylen, Q gleich 2,4-Toluenyl, D' gleich -O-CH$_2$CH$_2$-O-, B gleich 1,4-Phenylen und A gleich Phenyl, $\pi$ und $\Psi$ gleich 1 und $\lambda$ gleich 2, oder

$R^1$ gleich -H, X und Y' und gleich -O-, $R^2$ gleich Ethylen, Q gleich 3-Methylen-3,5,5-trimethyl-1-cyclohexyl, D' gleich -O-CH$_2$CH$_2$-O-, B gleich 1,4-Phenylen und A gleich Phenyl, $\pi$ und $\Psi$ gleich 1 und $\lambda$ gleich 2, oder

$R^1$ gleich -H, X und Y' und gleich -O-, $R^2$ gleich Ethylen, Q gleich 1,6-Hexamethylen, D' gleich -O-CH$_2$CH$_2$-O-, B-gleich 1,4-Phenylen und A gleich Phenyl, $\pi$ und $\Psi$ gleich 1 und $\lambda$ gleich 2

eingesetzt.

Üblicherweise werden die erfindungsgemäßen copolymerisierbaren Phenonderivate im Reaktionsgemisch ohne weitere Aufarbeitung bzw. Abtrennung von Lösungsmittel zur Copolymerisation eingesetzt.

Die erfindungsgemäßen Copolymerisate werden durch Polymerisation einer Mischung von ethylenisch ungesättigten Monomeren erhalten, welche die radikalisch copolymerisierbaren Phenonderivate in einer Gesamtmenge von 0,01 bis 10 Gew.-%, bevorzugt von 0,05 bis 5 Gew.-% und insbesondere bevorzugt von 0,1 bis 2 Gew.-%, jeweils bezogen auf die Gesamtmonomerenmenge, enthält. Entsprechend sind die verwendeten Phenonderivate in den Copolymerisaten in Mengen von 0,01 bis 10 Gew.-%, bevorzugt von 0,05 bis 5 Gew.-% und insbesondere bevorzugt von 0,1 bis 2 Gew.-% einpolymerisiert. An dieser Stelle sei festgehalten, dass die in der Beschreibung genannten prozentualen Mengengehalte der im Copolymerisat einpolymerisierten copolymerisierbaren Phenonderivate sowie der anderen Monomeren generell den Mengengehalten dieser Komponenten in der zu polymerisierenden Monomerenmischung entsprechen soll und umgekehrt.

Die Copolymerisate enthalten neben den vorgenannten Phenonderivate als Hauptmonomere im allgemeinen überwiegende Anteile, meist 50 bis 99,99 Gew.-%, vorzugsweise 70 bis 97,5 Gew.-% Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl und -2-ethylhexylester, Maleinsäuredimethylester oder Maleinsäure-di-n-butylester, einpolymerisiert. Als Comonomere kommen insbesondere in einfacher Weise radikalisch polymerisierbare Monomere in Betracht, wie beispielsweise Ethylen, vinylaromatische Monomere, wie Styrol, $\alpha$-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Nitrile $\alpha,\beta$-monoethylenisch ungesättigter Carbonsäuren, wie Acrylnitril sowie C$_{4-8}$-konjugierte Diene, wie 1,3-Butadien und Isopren.

Mit besonderem Vorteil enthalten die Copolymerisate zusätzlich zu den vorgenannten Monomeren 0,1 bis 15 Gew.-%, vorzugsweise 0,5 bis 8 Gew.-% an 3 bis 6 C-Atomen aufweisenden $\alpha,\beta$-monoethylenisch ungesättigten Mono-und Dicarbonsäuren, deren Amide und/oder deren Anhydride, wie insbesondere Acrylsäure, Methacrylsäure, Maleinsäure, Fumarsäure und Itaconsäure, Acrylamid und Methacrylamid, Maleinsäureanhydrid, ferner Vinylsulfonsäure, 2-Acrylamido-2-methylpropansulfonsäure, Styrolsulfonsäure und deren wasserlösliche Salze sowie N-Vinylpyrrolidon.

Die Copolymerisate können neben den bereits erwähnten Monomeren zusätzlich weitere Comonomere einpolymerisiert enthalten, beispielsweise solche, die üblicherweise die innere Festigkeit der Verfilmungen der Copolymerisate erhöhen. Diese ethylenisch ungesättigten Monomeren weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind N-Alkylolamide von 3 bis 10 C-Atome aufweisenden $\alpha,\beta$-monoethylenisch ungesättigten Carbonsäuren, unter denen das N-Methylolacrylamid und das N-Methylolmethacrylamid ganz besonders bevorzugt sind sowie deren Ester mit 1 bis 4 C-Atomen aufweisenden Alkanolen. Daneben kommen auch zwei Vinylreste aufweisende Monomere, zwei Vinylidenreste aufweisende Monomere sowie zwei Alkenylreste aufweisende Monomere in Betracht. Besonders vorteilhaft sind dabei die Di-Ester zweiwertiger Alkohole mit $\alpha,\beta$-monoethylenisch ungesättigten Monocar-

bonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylate sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Erfindungsgemäß werden die vorgenannten Monomeren, bezogen auf die Gesamtmenge der zu polymerisierenden Monomeren, häufig in Mengen von 0,1 bis 10 Gew.-% einpolymerisiert.

Die Art und Weise, in der die monomeren Komponenten im Verlauf der radikalischen Polymerisation dem Polymerisationsgefäß zugegeben wird, ist dem Durchschnittsfachmann bekannt. Diese können sowohl vollständig in das Polymerisationsgefäß vorgelegt, als auch nach Maßgabe ihres Verbrauchs im Verlauf der radikalischen Polymerisation kontinuierlich oder stufenweise zugesetzt werden. Im einzelnen hängt dies von der chemischen Natur des Initiatorsystems als auch von der Polymersiationstemperatur ab. Vorzugsweise wird ein kleiner Teil der monomeren Komponenten vorgelegt und der Rest nach Maßgabe des Verbrauchs der Polymerisationszone zugeführt. Selbstverständlich ist es auch möglich, dass im Verlauf der Polymerisation die Zusammensetzung des zu polymerisierenden Monomerengemisches verändert wird. Diese Verfahrensvarianten sind dem Fachmann bekannt. So kann beispielsweise in der sogenannten Stufenfahrweise dem Polymerisationsgefäß nach Maßgabe des Verbrauchs zuerst eine Monomerenmischung 1 und daran anschließend eine Monomerenmischung 2 mit einer anderen Monomerenzusammensetzung zugeführt werden, während in der sogenannten Gradientenfahrweise die Zusammensetzung der dem Polymerisationsgefäß zugeführten Monomerenmischung kontinuierlich verändert wird. Häufig erfolgt die Polymerisation unter Inertgasatmosphäre, beispielsweise unter Stickstoff oder Argon.

Die erfindungsgemäßen Copolymerisate haben üblicherweise K-Werte von 10 bis 150 und oft von 15 bis 100. Die Bestimmung der K-Werte erfolgt üblicherweise bei 25 °C nach DIN ISO 1628-1 mit einer 1 gew.-%igen Lösung der Copolymerisate in Tetrahydrofuran. Vorzugsweise beträgt der K-Wert 25 bis 55, wenn die Copolymerisate als Schmelzhaftkleber verwendet werden sollen. Sollen die Copolymerisate in UV-härtbaren Massen zum Beschichten von mineralischen Oberflächen verwendet werden, so betragen ihre K-Werte vorzugsweise 60 bis 100. Copolymerisate, die für Lacke verwendet werden sollen, haben vorzugsweise K-Werte von 15 bis 85.

Die erfindungsgemäßen Copolymerisate können Glasübergangstemperaturen von -70 bis +150 °C aufweisen. Abhängig vom Einsatzzweck werden häufig Copolymerisate benötigt, deren Glasübergangstemperaturen innerhalb bestimmter Bereiche liegen. Durch geeignete Auswahl der zu polymerisierenden ethylenisch ungesättigten Monomeren ist es dem Fachmann möglich, gezielt Copolymerisate herzustellen, deren Glasübergangstemperaturen im gewünschten Bereich liegen. Sollen beispielsweise die erfindungsgemäßen Copolymerisate als Haftkleber eingesetzt werden, wird die Zusammensetzung des zu polymerisierenden Monomerengemisches so gewählt, dass die erzeugten Copolymerisate Glasübergangstemperaturen < 0 °C, häufig ≤ +5 °C und oft ≤ +10 °C aufweisen. Sollen die Copolymerisate jedoch als UV-härtbare Bindemittel in Beschichtungsformulierungen Verwendung finden, wird die Zusammensetzung des zu polymerisierenden Monomerengemisches so gewählt, dass die erzeugten Copolymerisate Glasübergangstemperaturen von -40 bis +150 °C, häufig von 0 bis +100 °C und oft von +20 bis +80 °C aufweisen.

Mit der Glasübergangstemperatur Tg, ist der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Die Glasübergangstemperatur wird nach dem DSC-Verfahren ermittelt (Differential Scanning Calorimetry, 20 K/min, midpoint-Messung, DIN 53 765).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + \dots x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966,

2nd Ed. J.Wiley, New York 1975, und 3rd Ed. J. Wiley, New York 1989).

Die neuen Copolymerisate können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, beispielsweise in Wasser oder in geeigneten organischen Medien, oder in Lösung polymerisiert. Vorzugsweise werden die neuen Copolymerisate durch Polymerisation der monomeren Komponenten in organischen Lösungsmitteln, insbesondere in Lösungsmitteln mit einem Siedebereich von 50 bis 150 °C, vorzugsweise 60 bis 120 °C unter Verwendung der üblichen Menge an Polymerisationsinitiatoren, welche im allgemeinen bei 0,01 bis 10 Gew.-%, insbesondere 0,1 bis 4 Gew.-%, jeweils bezogen auf das Gesamtgewicht der monomeren Komponenten, liegt, hergestellt. Als organische Lösungsmittel kommen insbesondere Alkohole, wie Methanol, Ethanol, n-und iso-Propanol, n- und iso-Butanol, cyclische Ether, wie beispielsweise Tetrahydrofuran sowie Kohlenwasserstoffe, wie Toluol und Benzine eines Siedebereichs von 60 bis 120 °C in Frage. Ferner können Ketone, wie Aceton, Methylethylketon und Ester, wie beispielsweise Essigsäureethylester sowie Gemische von Lösungsmitteln der genannten Art eingesetzt werden, wobei Gemische, die iso-Butanol und/oder Methylethylketon in Mengen $\geq 70$ Gew.-%, besonders $\geq$ 80 Gew.-% und insbesondere $\geq 90$ Gew.-%, bezogen auf das eingesetzte Lösungsmittelgemisch, enthalten, vorgezogen werden.

Die Art und Weise, in der das Lösungsmittel oder Lösungsmittelgemisch im Verlauf der radikalischen Polymerisation dem Polymerisationsgefäß zugegeben wird, ist dem Durchschnittsfachmann bekannt. Es kann sowohl vollständig in das Polymerisationsgefäß vorgelegt, als auch im Verlauf der radikalischen Polymerisation kontinuierlich oder stufenweise eingesetzt werden. Auch kann das Lösungsmittel im Gemisch mit den Monomeren und/oder dem Initiator eingesetzt werden. Vorzugsweise wird ein Großteil des Lösungsmittels vorgelegt und der Rest gemeinsam mit den zu polymerisierenden Monomeren und/oder Initiatoren der Polymerisationszone zugeführt.

Als Polymerisationsinitiatoren kommen bei der Lösungspolymerisation beispielsweise Azoverbindungen, wie 2,2'-Azobisisobutyronitril, 2,2'-Azobis-2-methylbutyronitril, Diacylperoxide, wie Dibenzoylperoxid, Dilauroylperoxid, Didecanoylperoxid und Diisononanoylperoxid, Alkylperester, wie tert.-Butylperpivalat, tert.-Butylper-2-ethylhexanoat, tert.-Butylpermaleinat, tert.-Butylperisononanoat und tert.-Butylperbenzoat, Dialkylperoxide, wie Dicumylperoxid oder Di-tert.-butylperoxid, Peroxidicarbonate, wie Dimyristylperoxidicarbonat, Dicetylperoxidicarbonat, Bis(4-tert.-butylcyclohexyl)peroxidicarbonat, Dicyclohexylperoxidicarbonat, Bis(2-ethylhexyl)peroxidicarbonat, Hydroperoxide, wie tert.-Butylhydroperoxid, Cumolhydroperoxid allein oder im Gemisch in Frage. Bei der wässrigen Emulsionspolymerisation können die üblichen Initiatoren, wie beispielsweise Natrium-, Kalium- und Ammoniumperoxodisulfat oder aber auch dem Fachmann bekannte Redox-Systeme verwendet werden.

Die Art und Weise, in der der Initiator im Verlauf der radikalischen Polymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen Polymerisation kontinuierlich oder stufenweise eingesetzt werden. Im einzelnen hängt dies von der chemischen Natur des Initiatorsystems als auch von der Polymersiationstemperatur ab. Vorzugsweise wird ein kleiner Teil vorgelegt und der Rest nach Maßgabe des Verbrauchs der Polymerisationszone zugeführt. Häufig ist es günstig, wenn die Polymerisationsreaktion so geführt wird, dass zuerst $\leq 50$ Gew.-%, oft $\leq 45$ Gew.-% oder $\leq 40$ Gew.-% des Initiators kontinuierlich über eine längere Zeitperiode und daran anschließend > 50 Gew.-%, oft $\geq 55$ Gew.-% oder $\geq 60$ Gew.-% des Initiators kontinuierlich über eine kürzere Zeitperiode dem Polymerisationsgefäß zugeführt werden.

Die Polymerisation kann in an sich üblicher Weise durchgeführt werden in einer Polymerisationsapparatur, die im allgemeinen mit einem Rührer, mehreren Zulaufgefäßen bzw. -leitungen, Rückflußkühler und Heizungs- und Kühleinrichtungen versehen ist und für das Arbeiten unter Inertgasatmosphäre und Drücken oberhalb bzw. unterhalb des Atmosphärendruckes ausgerüstet ist.

Nach der Polymerisation in Lösung können die Lösungsmittel, gegebenenfalls unter vermindertem Druck abgetrennt werden, wobei man bei erhöhten Temperaturen von bis zu 150 °C arbeitet. Die neuen Copolymerisate können dann im lösungsmittelarmen oder lösungsmittelfreien Zustand, d.h. als Schmelzen, als Klebstoffe, vorzugsweise Haftklebstoffe und insbesondere Schmelzhaftklebstoffe oder als UV-härtbare Bindemittel in Beschichtungsformulierungen, wie beispielsweise Beschichtungsmittel zur Beschichtung von mineralischen Oberflächen oder als Lacke eingesetzt werden. In manchen Fällen kann es auch von Vorteil sein, die neuen Copolymerisate durch Copolymerisation in Substanz, d.h. ohne Mitwirkung eines Lösungsmittels herzustellen, wobei man chargenweise oder auch kontinuierlich, beispielsweise nach den Angaben der US-A 4,042,768, arbeiten kann.

Soweit man die neuen Copolymerisate in Form von Lösungen, beispielsweise als UV-härtbare Bindemittel in Beschichtungsformulierungen, wie beispielsweise Beschichtungsmittel zur Beschichtung von mineralischen Oberflächen oder als Lacke einsetzt, enthalten die Copolymerisatlösungen üblicherweise 1 bis 900 Gew.-Teile, bevorzugt 10 bis 100 Gew.-Teile und insbesondere bevorzugt 20 bis 40 Gew.-Teile Lösungsmittel pro 100 Gew.-Teile Copolymerisat. Häufig lassen sich für diese Zwecke die aus der Lösungspolymerisation erhältlichen Copolymerisatlösungen direkt einsetzen, oder daraus durch Verdünnen bzw. Aufkonzentrieren in einfacher Weise herstellen.

In manchen Fällen, beispielsweise wenn die neuen Copolymerisate durch radikalisch initiierte wässrige Emulsionspolymerisation hergestellt werden, können auch übliche Regler in den üblichen Mengen, beispielsweise in Mengen von 0,1 bis 10 Gew.-Teilen oder 0,5 bis 5 Gew.-Teilen pro 100 Gew.-Teilen der zur Polymerisation eingesetzten Monomeren mitverwendet werden. Derartige Regler werden zur Molekulargewichtsregulierung der Copolymerisate eingesetzt und sind dem Fachmann bekannt. Häufig werden Mercaptoverbindungen, wie 2-Mercaptoethanol, 3-Mercaptopropionsäuremethylester, 3-Mercaptopropyltrimethoxysilan, 3-Mercaptopropyl-methyldimethoxysilan, 3-Mercaptopropionsäure, n- oder tert.-Dedecylmercaptan, 1,6-Dimercaptohexan, 1,9-Dimercaptononan, Kohlenwasserstoffe, wie Cumol, Alkohole, wie beispielsweise iso-Propanol und iso-Butanol oder halogenierte Kohlenwasserstoffe, wie Tetrachlorkohlenstoff, Tetrabromkohlenstoff, Chloroform oder Bromoform, Ether, wie Tetrahydrofuran und Dioxan als Regler verwendet.

Werden die neuen Copolymerisate durch radikalisch initiierte wässrige Emulsionspolymerisation hergestellt, so findet die Polymerisation üblicherweise in Anwesenheit von Dispergiermitteln statt. Als Dispergiermittel können dem Fachmann geläufige Schutzkolloide und/oder Emulgatoren, beispielsweise nichtionische sowie anionische oder kationische Emulgatoren eingesetzt werden. Bevorzugt werden nichtionische und anionische Emulgatoren eingesetzt. Die Dispergiermittelmenge macht üblicherweise bis zu 30 Gew.-Teile, vorzugsweise 0,5 bis 10 Gew.-Teile und besonders bevorzugt 1 bis 6 Gew.-Teile, bezogen auf 100 Gew.-Teile der zu polymerisierenden Monomere, aus.

Häufig werden nach Beendigung Copolymerisation nicht umgesetzte Monomere aus dem Reaktionsgemisch entfernt. Bei der Lösungspolymerisation erfolgt dies gleichzeitig mit dem Entfernen des Lösungsmittel bei vermindertem Druck. Um dabei die Effektivität, insbesondere im Betriebsmaßstab zu erhöhen, wird das Copolymerisat am Ende der Lösungsmittelabtrennung mit Wasserdampf gestrippt. Diese Wasserdampfstrippung erfolgt häufig ebenfalls am Ende der radikalisch initiierten Emulsionspolymerisation, gegebenenfalls nach einem dazwischengeschalteten Nachpolymerisationschritt, wie er dem Fachmann beispielsweise aus den Schriften WO 95/33775, EP-A 767180 oder DE-A 19743759 bekannt ist. Von Bedeutung ist, dass die erfindungsgemäßen Photoinitiatoren, in copolymerisierter oder nicht copolymerisierter Form, im Vergleich zu den aus dem Stand der Technik bekannten copolymerisierbaren Photoinitiatoren, eine verbesserte Hydrolysestabilität gegenüber Wasser oder anderen protischen organischen Lösungsmitteln, wie beispielsweise iso-Propanol oder iso-Butanol, aufweisen.

Beim Einsatz der neuen Copolymerisate können diese in an sich üblicher Weise modifiziert und/oder konfektioniert und beispielsweise als Schmelzhaftkleber verwendet werden. So können z.B. übliche klebrigmachende Harze, beispielsweise Kohlenwasserstoffharze, modifizierte natürliche oder chemisch modifizierte Kolophoniumharze, welche zum überwiegenden Teil aus Abietinsäure oder Abietinsäurederivaten bestehen, Cumaron-Inden-Harze, Terpenphenolharze, Aldehydharze oder Homopolymerisate, wie Poly-2-ethylhexylacrylat oder Poly-$\alpha$-methylstyrol, ferner Weichmacher, beispielsweise auf Basis von Mono-, Di- oder Polyesterverbindungen, perchlorierten Kohlenwasserstoffen oder Paraffinölen, Farbstoffe und Pigmente oder Stabilisatoren oder kautschukelastische Stoffe, wie Natur- oder Synthesekautschuk, Polyvinylether sowie ferner Polybutadienöle in Mengen von 0,1 bis 50 Gew.-%, bezogen auf die Gesamtmasse, zugesetzt werden.

Zur Modifizierung kommen auch ein- oder mehrfach olefinisch ungesättigte höhermolekulare Verbindungen in Betracht, wie beispielsweise mit Acrylsäure veresterte Polyesterole und Polyetherole, wie die Acrylate von Tripropylenglykol, Tetraethylenglykol oder anderen Polyethylenglykolen. Geeignet sind außerdem Diacrylate und Dimethacrylate von Polytetrahydrofuran mit Molekulargewichten von meist 250 bis 2000 (Zahlenmittel). Derartige, mindestens diolefinisch ungesättigte Verbindungen können mit Vorteil in Mengen von 0,1 bis 10 Gew.-Teilen, bezogen auf 100 Gew.-Teile Copolymerisat, eingesetzt werden, wobei diolefinisch ungesättigte Verbindungen dieser Art mit einem Molekulargewicht von mindestens 500 (Zahlenmittel) von besonderem Interesse sind.

Die neuen Copolymerisate eignen sich insbesondere als Schmelzen, Lösungen oder in Form wässriger Dispersionen zur Herstellung von Überzügen, Beschichtungen und Imprägnierungen, insbesondere von Haftklebern, Haftklebefolien und Haftklebeetiketten sowie Prägezangenfolien. Dabei können die Massen in an sich üblicher Weise durch Streichen, Spritzen, Walzen, Rakeln oder Gießen, gegebenenfalls bei erhöhter Temperatur - meist im Temperaturbereich von 20 bis 150 °C - auf übliche Substrate, beispielsweise Papier, Pappe, Holz, Metalle, wie Aluminium, Kunststofffolien, wie Weich-PVC, Polyethylen, Polyamiden, Polyethylenglykolterephthalat sowie Polypropylen aufgebracht werden.

Soweit dabei Lösungsmittel mitverwendet werden, können diese von den Überzügen leicht, gegebenenfalls bei Raumtemperatur oder wenig erhöhten Temperaturen, im allgemeinen bei Temperaturen von 20 bis 150 °C und vorzugsweise bei 50 bis 80 °C abgedampft werden, wobei üblicherweise Heizstrahler oder Warmluftwälzvorrichtungen eingesetzt werden. Die gegebenfalls getrockneten oder vorgetrockneten Aufträge können anschließend durch Bestrahlen mit UV-Licht vernetzt werden, wobei gut klebende Überzüge erhalten werden, die eine hohe Kohäsion bei gleichzeitig guter Adhäsion und vorzüglicher Alterungsbeständigkeit aufweisen. Die Bestrahlung mit UV-Licht erfordert im Normalfall keine Inertgasbedingungen und kann üblicherweise an Luft erfolgen. Als UV-Strahler können die üblichen Strahler, beispielsweise Quecksilberdampfnieder-, -mittel- oder -hochdrucklampen eingesetzt werden, welche Leistungen von 20 bis 100 J/sec x $cm^2$ haben können. Dabei ermöglichen Lampen mit höherer Leistung im allgemeinen eine schnellere Vernetzung. In manchen Fällen kann bei der vernetzenden Bestrahlung gleichzeitig durch den IR-Anteil der Lampen restliches Lösungsmittel oder Wasser entfernt werden.

Die Klebeeigenschaften von flächigen Substraten, welche eine Haftklebeschicht aufweisen, kann durch Messung der Scherfestigkeit als Maß für die Kohäsion und der Schälfestigkeit als Maß für die Oberflächenklebrigkeit erfasst werden.

Beispiele

I Herstellung der copolymerisierbaren Photoinitiatoren

I a)Ethylenglykol-p-benzophenonether

In einem 2 1 Laborautoklaven wurden 520 g Diethylenglykoldiethylether, 286 g p-Hydroxybenzophenon (> 98 Gew.-%) und 0,8 g pulverförmiges Kaliumhydroxid vorgelegt. Anschliessend erfolgte eine 30 minütige Druckprüfung mit trockenem Stickstoff. Nach dem Entspannen auf Atmosphärendruck und Aufheizen der Reaktionsmischung unter Stickstoff auf 120 °C wurden 95,4 g Ethylenoxid bei einem maximalen Innendruck von 4 bar über einen Zeitraum von 1 h kontinuierlich eingegast. Nach dem Ende der Begasung mit Ethylenoxid ließ man die Reaktionsmischung so lange reagieren, bis der Druck für wenigstens 30 Minuten konstant war. Das Reaktionsgemisch wurde im heissen Zustand aus dem Autoklaven ausgetragen, mit 5 gew.-%iger wässriger Salzsäure neutralisiert, auf 2 1 Eiswasser gegossen und das Reaktionsprodukt durch ständiges Rühren zur Kristallisation gebracht. Der entstandene Feststoff wurde abgesaugt, mit Eiswasser gewaschen und im Vakuum getrocknet (40 °C, 10 mbar absolut). Das erhaltene Filtrat wurde am Rotationsverdampfer auf 20 % seines Volumens eingeengt, das ausgefallene Produkt abgesaugt, mit Eiswasser gewaschen und ebenfalls im Vakuum getrocknet. Die Gesamtausbeute betrug 82 % der Theorie.

I b)Copolymerisierbare Photoinitiatoren, allgemeine Herstellvorschrift

Es wurde 1 mol Isocyanat nach Tabelle 1 in wasserfreiem Tetrahydrofuran (THF) bei 20 bis 25 °C (Raumtemperatur) so gelöst, dass das im ersten Reaktionsschritt erzeugte Urethan-Addukt später 35 gew.-%ig in Lösung vorlag. Nach Überdecken mit trockenem Stickstoff wurde dann innerhalb von 5 Minuten 1 mol Hydroxyethylacrylat, vorher stabilisiert mit 100 ppm Tempol, bei Raumtemperatur zugegeben. Nun wurden 500 Gew.- ppm (bezogen auf das eingesetzte Isocyanat) Dibutylzinndilaurat zugesetzt, die Mischung etwa 5 Stunden bei 50 °C gerührt und die Abnahme des Isocyanatgehaltes titrimetrisch verfolgt. War der theoretische Isocyanatgehalt des Monourethans erreicht, wurde die den noch freien Isocyanatgruppen entsprechende molare Menge an Ethylenglykol-p-benzophenonether 35 gew.-%ig aus Stufe Ia), in 50 °C heissem THF gelöst, zugegeben. Die Reaktionsmischung wurde anschließend solange bei 50 °C weitergerührt bis titrimetrisch keine Isocyanatgruppen mehr nachgewiesen werden konnten. Die so erhaltenen Reaktionsgemische wurden direkt in der nachfolgenden Polymerisationsreaktion eingesetzt.

Tabelle 1: Isocyanate und Lösungsmittel

| Photoinitiator | Isocyanat |
|---|---|
| A | 2,4-Toluylendiisocyanat |
| B | Isophorondiisocyanat |
| C | HDI-Polyisocyanat |

| | |
|---|---|
| 2,4-Toluylendiisocyanat: | 95 Gew.-%, Fluka AG |
| Isophorondiisocyanat: | Vestanat®IPDI, Degussa-Hüls AG |
| HDI-Polyisocyanat: | Basonat® HI 100, BASF AG |
| Dibutylzinndilaurat: | 95 Gew-%, Merck-Schuchardt |
| Tetrahydrofuran: | 99,9 Gew.-%, wasserfrei |
| 2-Hydroxyethylacrylat: | ≥ 98,5 Gew.-%, BASF AG |
| Tempol: | 2,2,6,6-Tetramethyl-piperidin-1-oxyl-4-01, 98 Gew-%, Aldrich-Chemie |

I c)4-(4-Benzoylphenoxycarbonyloxy)-n-butylacrylat (Vergleichsphotoinitiator)

Die Herstellung von 4-(4-Benzoylphenoxycarbonyloxy)-n-butylacrylat erfolgte gemäß der Lehre der EP-A 377199. Im Vergleichsbeispiel wurde eine 35 gew.-%ige Lösung des Vergleichsphotoinitiators in o-Xylol eingesetzt.

## II Herstellung der Copolymerisate

### Beispiel 1

In einem heiz- und kühlbaren 2 1-Glasreaktor, ausgerüstet mit einem Ankerrührer, Rückflußkühler, Evakuier- und Dosiervorrichtungen wurden bei Raumtemperatur unter Stickstoffatmosphäre

| | |
|---|---|
| 108,5 g | iso-Butanol (IB; 99,5 Gew.-%) |
| 50,5 g | Zulauf 1 und |
| 4,3 g | Zulauf 2 |

vorgelegt und bei geschlossener Apparatur ohne Druckausgleich unter Rühren auf 100 °C aufgeheizt. Zeitgleich beginnend wurde bei dieser Temperatur die Restmenge von Zulauf 1 während 3 Stunden und die Restmenge von Zulauf 2 während 3,5 Stunden zudosiert. 15 Minuten nach Beendigung von Zulauf 2 wurde mit Zulauf 3 begonnen, der innerhalb von 15 Minuten zudosiert wurde. Gleichzeitig mit der Dosierung von Zulauf 3 erhöhte man die Temperatur auf 120 °C.
Nach Ende von Zulauf 3 wurde noch eine Stunde bei 120 °C nachpolymerisiert. Anschließend wurde die Temperatur auf 100 °C abgesenkt, der Überdruck vorsichtig auf Atmosphärendruck entspannt und anschließend das Lösungsmittel und die anderen leichtsiedenden Bestandteile durch vorsichtiges Anlegen von Vakuum bis zu einem Enddruck von 10 mbar (absolut) abdestilliert. Danach wurde der Reaktionsansatz auf Raumtemperatur abgekühlt.

Zulauf 1

| | |
|---|---|
| 491,0 g | n-Butylacrylat (nBA; $\geq$ 99,5 Gew.-%, Fa. BASF AG) |
| 278,5 g | 2-Ethylhexylacrylat (EHA: $\geq$ 99,6 Gew.-%, Fa. BASF AG) |
| 189,0 g | Methylmethacrylat (MMA; $\geq$ 99,9 Gew.-%, Fa. BASF AG) |
| 23,0 g | Acrylsäure (AS; $\geq$ 99,0 Gew.-%, Fa. BASF AG) |
| 15,1 g | einer 35 gew.-%igen Lösung von Photoinitiator A in THF |

Zulauf 2

| | |
|---|---|
| 41,7 g | IB |
| 0,3 g | tert.-Butylper-2-ethylhexanoat (TBEH; $\geq$ 98,5 Gew.-%, Fa. Peroxid-Chemie GmbH) |

Zulauf 3

| | |
|---|---|
| 16,7 g | IB |
| 2,0 g | TBEH |

Man erhielt ein klares, hochviskoses Polymerisat mit einem Feststoffgehalt von > 99,9 Gew.-%.
Der Feststoffgehalt wurde generell bestimmt indem 1 bis 2 g des erhaltenen Polymerisats in einem Aluminiumtiegel mit einem Durchmesser von ca. 3 cm bei 140 °C und Atmosphärendruck bis zur Gewichtskonstanz erhitzt wurde. Es wurden jeweils zwei Messungen durchgeführt. Die angegebenen Werte stellen die Mittelwerte aus diesen Messungen dar. In allen folgenden Beispielen wurden ebenfalls Feststoffgehalte > 99,9 Gew.-% bestimmt.
Der K-Wert des Copolymerisats betrug 50,5.
Die K-Werte der Copolymerisate wurden generell nach H. Fikentscher, Cellulosechemie 1932 (13) Seiten 58 bis 64 und Seiten 71 bis 74 bestimmt, wobei K = k x $10^3$ bedeutet. Die Messungen erfolgten bei 25 °C mit einer 1 gew.-%igen Lösung der Copolymerisate in THF (entsprechend DIN ISO 1628-1).

Vergleichsbeispiel

Das Vergleichsbeispiel erfolgte analog Beispiel 1 mit der Ausnahme, dass anstelle des Photoinitiators A die gleiche Menge des Vergleichsphotoinitiators eingesetzt wurde. Der gemessene K-Wert betrug 50,5.

Beispiel 2

Beispiel 2 erfolgte analog Beispiel 1 mit der Ausnahme, das anstelle von IB Methylethylketon (MEK; $\geq$ 99,0 Gew.-%, Deutsche Shell Chemie GmbH) verwendet wurde. Es wurde ein K-Wert von 51,8 gemessen.

Beispiel 3

Beispiel 3 erfolgte analog Beispiel 1 mit der Ausnahme, dass anstelle des Photoinitiators A die gleiche Menge an Photoinitiator B eingesetzt wurde. Der gemessene K-Wert betrug 48,0.

Beispiel 4

Beispiel 4 erfolgte analog Beispiel 1 mit der Ausnahme, dass anstelle des Photoinitiators A die gleiche Menge an Photoinitiator C eingesetzt wurde. Der gemessene K-Wert betrug 48,6.

Beispiel 5

Beispiel 5 erfolgte analog Beispiel 1 mit der Ausnahme, dass 30,2 g einer 35 gew.-%igen Lösung von Photoinitiator A in THF eingesetzt wurden. Der gemessene K-Wert betrug 52,0.

Beispiel 6

Beispiel 6 erfolgte analog Beispiel 1 mit der Ausnahme, dass in den Zuläufen 2 und 3 anstelle von TBEH 2,2'-Azobis-2-methylbutyronitril (Wako V59, WAKO Chemicals GmbH) eingesetzt wurden. Der gemessene K-Wert betrug 49,6.

Beispiel 7

In einem heiz- und kühlbaren 2 1-Glasreaktor, ausgerüstet mit einem Ankerrührer, Rückflußkühler, Evakuier- und Dosiervorrichtungen wurden bei Raumtemperatur unter Stickstoffatmosphäre

| | |
|---|---|
| 110,5 g | IB |
| 52,5 g | Zulauf 1 und |
| 4,0 g | Zulauf 2 |

vorgelegt und bei geschlossener Apparatur ohne Druckausgleich unter Rühren auf 100 °C aufgeheizt. Zeitgleich beginnend wurde bei dieser Temperatur die Restmenge von Zulauf 1 während 3 Stunden und die Restmenge von Zulauf 2 während 3,5 Stunden zudosiert. 15 Minuten nach Beendigung von Zulauf 2 wurde mit Zulauf 3 begonnen, der innerhalb von 15 Minuten zudosiert wurde. Gleichzeitig mit der Dosierung von Zulauf 3 erhöhte man die Temperatur auf 120 °C.
Nach Ende von Zulauf 3 wurde noch eine Stunde bei 120 °c nachpolymerisiert. Anschließend wurde die Temperatur auf 100 °C abgesenkt, der Überdruck vorsichtig auf Atmosphärendruck entspannt und danach das Lösungsmittel und die anderen leichtsiedende Bestandteile durch vorsichtiges Anlegen von Vakuum bis zu einem Enddruck von 10 mbar (absolut) abdestilliert. Danach wurde auf Raumtemperatur abgekühlt. Man erhielt ein klares, hochviskoses Polymerisat mit einem Feststoffgehalt von > 99,9 Gew.-%. Der K-Wert wurde zu 50, 5 bestimmt.

Zulauf 1

| | |
|---|---|
| 422,0 g | nBA |
| 347,5 g | EHA |

(fortgesetzt)

| | |
|---|---|
| 189,0 g | MMA |
| 25,0 g | AS |
| 12,3 g | einer 35 gew.-%igen Lösung von Photoinitiator A in THF |

Zulauf 2

| | |
|---|---|
| 41,7 g | IB |
| 0,4 g | TBEH |

Zulauf 3

| | |
|---|---|
| 16,7 g | IB |
| 2,4 g | TBEH |

Beispiel 8

Beispiel 8 erfolgte analog Beispiel 7 mit der Ausnahme, das anstelle von IB MEK; verwendet wurde. Es wurde ein K-Wert von 48,8 gemessen.

Beispiel 9

Beispiel 9 erfolgte analog Beispiel 7 mit der Ausnahme, dass anstelle des Photoinitiators A die gleiche Menge an Photoinitiator B eingesetzt wurde. Der gemessene K-Wert betrug 48,6.

Beispiel 10

Beispiel 10 erfolgte analog Beispiel 7 mit der Ausnahme, dass anstelle des Photoinitiators A die gleiche Menge an Photoinitiator C eingesetzt wurde. Der gemessene K-Wert betrug 48,6.

Beispiel 11

Beispiel 5 erfolgte analog Beispiel 7 mit der Ausnahme, dass 24,6 g einer 35 gew.-%igen Lösung von Photoinitiator A in THF eingesetzt wurden. Der gemessene K-Wert betrug 50,2.

Beispiel 12

Beispiel 12 erfolgte analog Beispiel 7 mit der Ausnahme, dass in den Zuläufen 2 und 3 anstelle von TBEH Wako V59 eingesetzt wurden. Der gemessene K-Wert betrug 48,5.

Beispiel 13

In einem heiz- und kühlbaren 2 1-Glasreaktor, ausgerüstet mit. einem Ankerrührer, Rückflußkühler, Evakuier- und Dosiervorrichtungen wurden bei -Raumtemperatur unter Stickstoffatmosphäre

| | |
|---|---|
| 115 , 0 g | IB |
| 59,5 g | Zulauf 1 und |
| 3,3 g | Zulauf 2 |

vorgelegt und bei geschlossener Apparatur ohne Druckausgleich unter Rühren auf 100 °C aufgeheizt. Zeitgleich beginnend wurde bei dieser Temperatur die Restmenge von Zulauf 1 während 3,5 Stunden und die Restmenge von Zulauf 2 während 4 Stunden zudosiert. 15 Minuten nach Beendigung von Zulauf 2 wurde mit Zulauf 3 begonnen, der innerhalb von 15 Minuten zudosiert wurde. Gleichzeitig mit der Dosierung von Zulauf 3 erhöhte man die Temperatur auf 115 °C.

Nach Ende von Zulauf 3 wurde noch zwei Stunden bei 115 °C nachpolymerisiert. Anschließend wurde die Temperatur auf 100 °C abgesenkt, der Überdruck vorsichtig auf Atmosphärendruck entspannt und danach das Lösungsmittel und die anderen leichtsiedende Bestandteile durch vorsichtiges Anlegen von Vakuum bis zu einem Enddruck von 10 mbar (absolut) abdestilliert. Danach wurde auf Raumtemperatur abgekühlt. Man erhielt ein klares, hochviskoses Polymerisat mit einem Feststoffgehalt von > 99,9 Gew.-%. Der K-Wert wurde zu 50,1 bestimmt.

Zulauf 1

| | |
|---|---|
| 1117,0 g | nBA |
| 59,1 g | AS |
| 11,5 g | einer 35 gew. -%igen Lösung von Photoinitiator A in THF |

Zulauf 2

| | |
|---|---|
| 65,8 g | IB |
| 1,3 g | TBEH |

Zulauf 3

| | |
|---|---|
| 19,7 g | IB |
| 2,6 g | TBEH |

Beispiel 14

In einem heiz- und kühlbaren 2 1-Glasreaktor, ausgerüstet mit einem Ankerrührer, Rückflußkühler, Evakuier- und Dosiervorrichtungen wurden bei Raumtemperatur unter Stickstoffatmosphäre

| | |
|---|---|
| 115,0 g | IB |
| 59,5 g | Zulauf 1 und |
| 3,3 g | Zulauf 2 |

vorgelegt und bei geschlossener Apparatur ohne Druckausgleich unter Rühren auf 100 °C aufgeheizt. Zeitgleich beginnend wurde bei dieser Temperatur die Restmenge von Zulauf 1 während 3,5 Stunden und die Restmenge von Zulauf 2 während 4 Stunden zudosiert. 15 Minuten nach Beendigung von Zulauf 2 wurde mit Zulauf 3 begonnen, der innerhalb von 15 Minuten zudosiert wurde. Gleichzeitig mit der Dosierung von Zulauf 3 erhöhte man die Temperatur auf 115 °C.

Nach Ende von Zulauf 3 wurde noch zwei Stunden bei 115 °C nachpolymerisiert. Anschließend wurde die Temperatur auf 100 °C abgesenkt, der Überdruck vorsichtig auf Atmosphärendruck entspannt und danach das Lösungsmittel und die anderen leichtsiedende Bestandteile durch vorsichtiges Anlegen von Vakuum bis zu einem Enddruck von 10 mbar (absolut) abdestilliert. Danach wurde auf Raumtemperatur abgekühlt. Man erhielt ein klares, hochviskoses Polymerisat mit einem Feststoffgehalt von > 99,9 Gew.-%. Der K-Wert wurde zu 50,5 bestimmt.

Zulauf 1

| | |
|---|---|
| 1100,0 g | nBA |
| 55,1 g | AS |

(fortgesetzt)

| | |
|---|---|
| 22,0 g | Maleinsäureanhydrid (MSA; > 99,7 Gew.-%, Fa. Lonza S.P.A.) |
| 11,5 g | einer 35 gew.-%igen Lösung von Photoinitiator A in THF |

Zulauf 2

| | |
|---|---|
| 65,8 g | IB |
| 1,3 g | TBEH |

Zulauf 3

| | |
|---|---|
| 19,7 g | IB |
| 2,6 g | TBEH |

Beispiel 15

In einem heiz- und kühlbaren 2 1-Glasreaktor, ausgerüstet mit einem Ankerrührer, Rückflußkühler, Evakuier- und Dosiervorrichtungen wurden bei Raumtemperatur unter Stickstoffatmosphäre

| | |
|---|---|
| 115 , 0 g | IB |
| 59,5 g | Zulauf 1 und |
| 3,3 g | Zulauf 2 |

vorgelegt und bei geschlossener Apparatur ohne Druckausgleich unter Rühren auf 100 °C aufgeheizt. Zeitgleich beginnend wurde bei dieser Temperatur die Restmenge von Zulauf 1 während 3,5 Stunden und die Restmenge von Zulauf 2 während 4 Stunden zudosiert. 15 Minuten nach Beendigung von Zulauf 2 wurde mit Zulauf 3 begonnen, der innerhalb von 15 Minuten zudosiert wurde. Gleichzeitig mit der Dosierung von Zulauf 3 erhöhte man die Temperatur auf 115 °C.

Nach Ende von Zulauf 3 wurde noch zwei Stunden bei 115 °C nachpolymerisiert. Anschließend wurde die Temperatur auf 100 °C abgesenkt, der Überdruck vorsichtig auf Atmosphärendruck entspannt und danach das Lösungsmittel und die anderen leichtsiedende Bestandteile durch vorsichtiges Anlegen von Vakuum bis zu einem Enddruck von 10 mbar (absolut) abdestilliert. Danach wurde auf Raumtemperatur abgekühlt. Man erhielt ein klares, hochviskoses Polymerisat mit einem Feststoffgehalt von > 99,9 Gew.-%. Der K-Wert wurde zu 49,3 bestimmt.

Zulauf 1

| | |
|---|---|
| 1043,0 g | nBA |
| 133,1 g | AS |
| 22,0 g | einer 35 gew.-%igen Lösung von Photoinitiator A in THF |

Zulauf 2

| | |
|---|---|
| 65, 0 g | IB |
| 1,7 g | TBEH |

Zulauf 3

| | |
|---|---|
| 19,9 g | IB |
| 2,6 g | TBEH |

Beispiel 16

Beispiel 16 wurde analog Beispiel 15 hergestellt mit der Ausnahme, dass folgende Zuläufe verwendet wurden:

Zulauf 1

| | |
|---|---|
| 1000,0 g | nBA |
| 105, 1 g | AS |
| 72,0 g | MSA |
| 13,5 g | einer 35 gew.-%igen Lösung von Photoinitiator A in THF |

Zulauf 2

| | |
|---|---|
| 68, 4 g | IB |
| 1,7 g | TBEH |

Zulauf 3

| | |
|---|---|
| 19 , 7 g | IB |
| 2,8 g | TBEH |

Es wurde ein K-Wert von 48,6 bestimmt.

Beispiel 17

In einem heiz- und kühlbaren 2 1-Glasreaktor, ausgerüstet mit einem Ankerrührer, Rückflußkühler, Evakuier- und Dosiervorrichtungen wurden bei Raumtemperatur unter Stickstoffatmosphäre

| | |
|---|---|
| 110, 0 g | IB |
| 59,0 g | Zulauf 1 und |
| 2,5 g | Zulauf 2 |

vorgelegt und bei geschlossener Apparatur ohne Druckausgleich unter Rühren auf 100 °C aufgeheizt. Zeitgleich beginnend wurde bei dieser Temperatur die Restmenge von Zulauf 1 während 4 Stunden und die Restmenge von Zulauf 2 während 4,5 Stunden zudosiert. 15 Minuten nach Beendigung von Zulauf 2 wurde mit Zulauf 3 begonnen, der innerhalb von 15 Minuten zudosiert wurde. Gleichzeitig mit der Dosierung von Zulauf 3 erhöhte man die Temperatur auf 115 °C.
Nach Ende von Zulauf 3 wurde noch zwei Stunden bei 115 °C nachpolymerisiert. Anschließend wurde die Temperatur auf 100 °C abgesenkt, der Überdruck vorsichtig auf Atmosphärendruck entspannt und danach das Lösungsmittel und die anderen leichtsiedende Bestandteile durch vorsichtiges Anlegen von Vakuum bis zu einem Enddruck von 10 mbar (absolut) abdestilliert. Danach wurde auf Raumtemperatur abgekühlt. Man erhielt ein klares, hochviskoses Polymerisat mit einem Feststoffgehalt von > 99,9 Gew.-%. Der K-Wert wurde zu 46,5 bestimmt.

Zulauf 1

| | | |
|---|---|---|
| 910,0 g | EHA | |
| 91,0 g | Hydroxyethylacrylat (≥ 98,5 Gew.-%, Fa. BASF AG) | |
| 22,2 g | einer 35 gew.-%igen Lösung von Photoinitiator A in THF | |

Zulauf 2

| | |
|---|---|
| 35,8 g | IB |
| 0,8 g | TBEH |

Zulauf 3

| | |
|---|---|
| 21,7 g | IB |
| 2,8 g | TBEH |

Es wurde ein K-Wert von 48,6 bestimmt.

III Anwendungstechnische Prüfungen

Die in den Beispielen 1 bis 17 hergestellten Copolymerisate wurden anwendungstechnisch auf deren Haftklebstoffeigenschaften untersucht. Dabei wurde wie folgt vorgegangen:

a) Herstellung der Prüfstreifen

Das zu prüfende Copolymerisat wurde ohne Zusatz von Tackifiern untersucht. Dazu wurde das Copolymerisat auf einem beheizbaren Streichtisch bei 85 bis 120 °C mit einem Rakel in dünner Schicht auf eine handelsübliche Polyesterfolie (Hostaphanfolie RN 36) aufgetragen und anschließend auf Raumtemperatur abgekühlt. Die Spalthöhe des Rakel wurde dabei so gewählt, dass sich für das Copolymerisat eine Auftragsmenge von 19 bis 21 g/m$^2$ ergab. Die Bestrahlung erfolgte mit einem CK-Strahler der Fa. IST-Strahlentechnik Metz GmbH, welcher eine Leistung von 75 mJ/sec x cm$^2$ aufwies. Dazu wurde die beschichtete Folie auf ein laufendes Endlosband gelegt, so dass die beschichtete Folie in einem Abstand von 10 cm mit einer Geschwindigkeit von 58 m/min unter der Lampe hindurchlief. Die Bestrahlung erfolgte unter Luft. Die so hergestellten Folien wurden in 2,5 cm breite und 25 cm lange Streifen geschnitten.

b) Prüfung der Scherfestigkeit (in Anlehnung an FINAT FTM 7)

Der jeweilige Prüfstreifen wurde so auf den Rand eines Prüfblechs aus Edelstahl verklebt, dass eine Verklebungsfläche von 12,5 x 12,5 mm$^2$ resultierte. 10 Minuten nach dem Verkleben wurde dann am überstehenden Ende der Folie ein 1000 g-Gewicht befestigt und das Prüfblech senkrecht in einem Raum mit einer Temperatur von konstant 23 °C und einer relativen Luftfeuchtigkeit von 50 % aufgehängt. Die Zeit bis zum Reißen der Verklebung unter Einfluss des Gewichts ist ein Maß für die Scherfestigkeit, welche wiederum ein Maß für die Kohäsion darstellt. Diese ist umso größer, je länger die Zeitperiode bis zum Reißen der Verklebung ist. Pro Polymerisat wurden drei unabhängige Bestimmungen durchgeführt. Die in Tabelle 2 angegebenen Werte stellen Mittelwerte aus diesen drei Bestimmungen dar.

c) Prüfung der Schälfestigkeit (in Anlehnung an FINAT FTM 1)

Einen Prüfstreifen klebte man bei 23 °C und 50 % relative Luftfeuchtigkeit auf ein Edelstahlprüfblech.
Nach Ablauf einer vorgegebenen Kontaktzeit von 24 Stunden wurde der Streifen mit Hilfe einer Zugprüfmaschine in einem Winkel von 180° mit einer Geschwindigkeit von 300 mm pro Minute vom Prüfblech abgezogen. Die hierfür erforderliche Kraft ist ein Maß für die Adhäsion. Sie wird als Schälfestigkeit bezeichnet und in Newton pro 2,5 cm (N/2,5 cm) angegeben. Die Adhäsion ist umso höher, je höher der Wert für die Schälfestigkeit nach der angegebenen Zeit ist. Pro Polymerisat wurden jeweils drei unabhängige Bestimmungen durchgeführt. Die in Tabelle 2 angegebenen Werte stellen Mittelwerte aus diesen drei Bestimmungen dar.

Tabelle 2: Zusammenfassende Darstellung der Scherfestigkeit und der Schälfestigkeit der aus den Beispielen 1 bis 17 erhaltenen Copolymerisate

| Polymerisat aus Beispiel | Scherfestigkeit in Minuten | Schälfestigkeit in N/2,5 cm nach 24 Stunden |
|---|---|---|
| 1 | 135 | 10,2 |
| Vergleich | 75 | 9,7 |
| 2 | 125 | 12,7 |
| 3 | 110 | 17,1 |
| 4 | 90 | 17,0 |
| 5 | 148 | 10,5 |
| 6 | 111 | 12,0 |
| 7 | 115 | 12,9 |
| 8 | 105 | 12,1 |
| 9 | 108 | 14,3 |
| 10 | 101 | 14,0 |
| 11 | 137 | 10,9 |
| 12 | 106 | 11,1 |
| 13 | 130 | 10,5 |
| 14 | 115 | 10,8 |
| 15 | 111 | 12,1 |
| 16 | 108 | 10,9 |
| 17 | 118 | 11,8 |

Wie aus Tabelle 2 klar ersichtlich ist, weisen die erfindungs-gemäßen Schmelzhaftklebstoffe, im Vergleich zu einem Haftklebstoff, bei dessen Herstellung ein nichterfingungsgemässer Photoinitiator eingesetzt wurde, deutlich höhere Scherfestigkeiten (Kohäsion) auf. Ebenfalls stark verbessert sind die nach 24 Stunden erhaltenen Schälfestigkeiten (Adhäsion).

**Patentansprüche**

1.  Verfahren zur Herstellung von UV-vernetzbaren Copolymerisaten, **dadurch gekennzeichnet, dass** ein Gemisch ethylenisch ungesättigter Monomerer, welches 0,01 bis 10 Gew.-% radikalisch copolymerisierbare Phenonderivate enthält, welche durch Umsetzung von

    a) Acryl- oder Methacrylverbindungen, welche mindestens eine mit Isocyanat reaktive Gruppe aufweisen [Verbindungen a)] mit
    b) Verbindungen, welche mindestens zwei Isocyanatgruppen aufweisen [Verbindungen b)] und
    c) Verbindungen c) der allgemeinen Formel (VI)

    $$A\text{-}C(=O)\text{-}B\text{-}D \qquad (VI),$$

    in der die Substituenten folgende Bedeutung haben:

A $C_1$- bis $C_3$-Alkyl, gegebenenfalls mit 1, 2 oder 3 Halogenen, $C_1$- bis $C_6$-Alkyl-, Ester- oder Alkoxygruppen substituiertes $C_6$-bis $C_{10}$-Aryl sowie Aralkyl mit 6 bis 10 C-Atomen im Arylteil und 1 bis 6 C-Atomen im Alkylteil,
B $C_6$- bis $C_{10}$-Arylen, welches gegebenenfalls durch 1, 2 oder 3 Halogene, $C_1$- bis $C_6$-Alkyl-, Ester- oder Alkoxygruppen substituiert ist und
D $-NH_2$, $-NHR^3$, -OH, -SH oder ein Strukturelement $-X-R^2(-Y)_\pi$, mit der unter Formel (I) angegebenen Bedeutung,

erhalten werden, unter Verwendung eines Polymerisationsinitiators radikalisch polymerisiert wird.

2. Verfahren nach Anspruch 1, **dadurch gekennzeichnet, dass** es sich bei den Verbindungen a) um Acryl- oder Methacrylverbindungen der allgemeinen Formel (I)

$$H_2C=CR^1-C(=O)-X-R^2(-Y)_\pi \qquad (I)$$

handelt, in der die Substituenten und Indizes folgende Bedeutung haben:

$R^1$ -H, $-CH_3$,
X -O-, -NH-, $-NR^3$- oder -S-,
$R^3$ lineares oder verzweigtes $C_1$- bis $C_6$-Alkyl,
$R^2$ $(\pi+1)$-bindige,
gegebenenfalls substituierte lineare oder verzweigte $C_1$- bis $C_{12}$-Alkylgruppe, oder
gegebenenfalls substituierte $C_3$- bis $C_{12}$-Cycloalkylgruppe, oder
gegebenenfalls substituierte $C_6$- bis $C_{10}$-Arylgruppe,
Y -OH, $-NH_2$, $-NHR^3$ oder -SH,
$\pi$ Zahl von 1 bis 5,

wobei in Formel (I) das Strukturelement $-R^2(-Y)_\pi$ aber auch eine Gruppe der allgemeinen Formel (II), (III) oder (IV)

$$-(E0)_k-(PO)_l-H \qquad (II),$$

$$-(PO)_l-(EO)_k-H \qquad (III),$$

$$-(EO_k/PO_l)-H \qquad (IV)$$

sein kann, wobei
EO für eine $-CH_2-CH_2-O$-Gruppe,
PO für eine $-CH_2-CH(CH_3)-O$- oder eine $-CH(CH_3)-CH_2-O$-Gruppe steht und k und 1 für Zahlenwerte von 0 bis 15 stehen, wobei aber k und 1 nicht gleichzeitig 0 sind.

3. Verfahren nach Anspruch 1 oder 2, **dadurch gekennzeichnet, dass** es sich bei den Verbindungen b) um Verbindungen der allgemeinen Formel (V)

$$Q(-NCO)_\lambda \qquad (V)$$

handelt,
in der Q
eine lineare oder verzweigte $C_3$- bis $C_{16}$-Alkanverbindung, welche gegebenenfalls durch 1, 2 oder 3 Halogene, Oxo-, Ester- oder Alkoxygruppen substituiert ist, oder
eine $C_6$- bis $C_{14}$-aromatische Verbindung, welche gegebenenfalls durch 1, 2 oder 3 Halogene, $C_1$- bis $C_6$-Alkyl-, Oxo-, Ester oder Alkoxygruppen substituiert ist, oder
eine $C_3$- bis $C_{16}$-Cycloalkanverbindung, welche gegebenenfalls durch 1, 2 oder 3 Halogene, $C_1$- bis $C_6$-Alkyl-, Oxo-, Ester- oder Alkoxygruppen substituiert ist, oder
eine Arylalkylverbindung mit 6 bis 10 C-Atomen im Arylteil und 1 bis 6 C-Atomen im Alkylteil, welche gegebenenfalls durch 1, 2 oder 3 Halogene, Oxo-, Ester- oder Alkoxygruppen substituiert ist,
bedeutet und $\lambda$ eine Zahl $\geq 2$ ist.

4.  Verfahren nach einem der Ansprüche 2 bis 3, **dadurch gekennzeichnet, dass** in Verbindung a) Y gleich -OH und $\pi$ gleich 1, in Verbindung b) $\lambda$ gleich 2 und in Verbindung c) A gleich Methyl oder Phenyl, B gleich 1,4-Phenylen und D gleich $-O-CH_2CH_2-OH$ ist.

5.  Verfahren nach einem der Ansprüche 2 bis 4, **dadurch gekennzeichnet, dass** das Verhältnis der Molzahl von Verbindung b) zum Produkt aus Molzahl von Verbindung a) und der Zahl $\pi$ 0,8 zu 1 bis 1 zu 0,8 beträgt.

6.  Copolymerisate, erhältlich nach einem Verfahren gemäß einem der Ansprüche 1 bis 5.

7.  Copolymerisate nach Anspruch 6 mit einer Glasübergangstemperatur von -70 bis +150 °C.

8.  Verwendung der Copolymerisate gemäß einem der Ansprüche 6 oder 7 als UV-härtbare Bindemittel oder Klebstoffe.

9.  Verwendung der Copolymerisate gemäß einem der Ansprüche 6 oder 7 als Haftklebstoffe, insbesondere Schmelzhaftklebstoffe.


**Claims**

1.  A process for the production of a UV-crosslinkable copolymer, which comprises free-radically polymerizing a mixture of ethylenically unsaturated monomers comprising a free-radically copolymerizable phenone derivative obtained by reaction of

    a) a (meth)acrylic compound exhibiting at least one isocyanate-reactive group [compound a)] with
    b) a compound having at least two isocyanate groups [compound b)] and
    c) a compound c) of the general formula (VI).

    $$A-C(=O)-B-D \qquad (VI),$$

    in which the substituents have the following meaning:

    A denotes $C_1-C_3$ alkyl, $C_6-C_{10}$ aryl, optionally substituted by 1, 2, or 3 halogens, $C_1-C_6$ alkyl, ester, or alkoxy groups, and aralkyl containing from 6 to 10 carbons in the aryl moiety and from 1 to 6 carbons in the alkyl moiety,
    B denotes $C_6-C_{10}$ arylene, optionally substituted by 1, 2, or 3 halogens, $C_1-C_6$ alkyl, ester, or alkoxy groups and
    D denotes $-NH_2$, $-NHR^3$, OH, SH, or a structural element $-X-R^2(-Y)_\pi$, the variants having the meanings stated for formula (I).

2.  The process according to claim 1 wherein the compound a) is a (meth)acrylic compound of the general formula (I)

    $$H_2C=CR^1-C(=O)-X-R^2(-Y)_\pi \qquad (I),$$

    in which the substituents and indices have the following meanings:

    $R^1$ denotes -H, $-CH_3$,
    X denotes -O-, -NH-, $-NR^3-$ or -S-,
    $R^3$ denotes linear or branched $C_1-C_6$ alkyl,
    $R^2$ denotes a $(\pi+1)$-binding, optionally substituted linear or branched $C_1-C_{12}$ alkyl group, or
    a $C_3-C_{12}$ cycloalkyl group, optionally substituted, or
    a $C_6-C_{10}$ aryl group, optionally substituted,
    Y denotes -OH, $-NH_2$, $-NHR^3$, or -SH,
    $\pi$ is a number from 1 to 5,

    while the structural element $-R^2(-Y)_\pi$ in formula (I) can alternatively be a group of the general formula (II), (III), or (IV)

    $$-(EO)_k-(PO)_l-H \qquad (II),$$

    $$-(PO)_l-(EO)_k-H \qquad (III),$$

$$-(EO_k/PO_l)-H \qquad (IV),$$

in which
EO stands for a $-CH_2-CH_2-O$ group,
PO stands for a $-CH_2-CH(CH_3)-O$ or a $-CH(CH_3)-CH_2-O$ group and k and 1 are numerical values of from 0 to 15, but k and l are not both 0.

**3.** The process according to claim 1 or claim 2 wherein compound b) is a compound of the general formula (V)

$$Q\,(-NCO)_\lambda \qquad (V),$$

in which
Q is a linear or branched $C_3-C_{16}$ alkane compound, optionally substituted by 1, 2, or 3 halogens, oxo, ester, or alkoxy groups, or
a $C_6-C_{14}$ aromatic compound, optionally substituted by 1, 2, or 3 halogens, or $C_1-C_6$ alkyl, oxo, ester, or alkoxy groups, or a $C_3-C_{16}$ cycloalkane compound, optionally substituted by 1, 2, or 3 halogens, $C_1-C_6$ alkyl, oxo, ester, or alkoxy groups, or an arylalkyl compound containing from 6 to 10 carbons in the aryl moiety and from 1 to 6 carbon atoms in the alkyl moiety, optionally substituted by 1, 2, or 3 halogens, oxo, ester, or alkoxy groups, and $\lambda$ is a number $\geq 2$ .

**4.** The process according to any of claims 2 to 3 wherein, in compound a), Y denotes -OH and $\pi$ denotes 1, in compound b), $\lambda$ denotes 2, and, in compound c), A denotes methyl or phenyl, B denotes 1,4-phenylene, and D denotes -O-$CH_2CH_2$-OH.

**5.** The process according to any of claims 2 to 4 wherein the ratio of the number of mols of compound b) to the product of the number of mols of compound a) and the number $\pi$ is from 0.8:1 to 1:0.8.

**6.** A copolymer obtainable by a process according to any of claims 1 to 5.

**7.** The copolymer according to claim 6 having a glass-transistion temperature of from -70 to +150°C.

**8.** The use of a copolymer according to claim 6 or claim 7 as a UV-curable binding agent or adhesive.

**9.** The use of a copolymer according to claim 6 or claim 7 as a pressure-sensitive adhesive, particularly a hot-melt pressure-sensitive adhesive.

**Revendications**

**1.** Procédé de préparation de copolymères réticulables par UV, **caractérisé en ce qu'**un mélange de monomères éthyléniquement insaturés qui contient 0,01 à 10 % en poids de dérivés de phénone copolymérisables radicalement qui sont obtenus par mise en réaction

a) de composés acryliques ou méthacryliques qui présentent au moins un groupe réactif aux isocyanates [composés a)] avec
b) des composés qui présentent au moins deux groupes isocyanate [composés b)] et
c) des composés c) de formule générale (VI)

$$A-C(=O)-B-D \qquad (VI)$$

dans laquelle les substituants ont la signification suivante :

A un radical $C_1$- à $C_3$-alkyle,
un radical $C_6$ à $C_{10}$-aryle substitué éventuellement avec 1, 2 ou 3 halogènes, des groupes $C_1$- à $C_6$-alkyle, ester ou alcoxy ainsi qu' aralkyle avec 6 à 10 atomes C dans la partie aryle et 1 à 6 atomes C dans la partie alkyle,

B un radical $C_6$- à $C_{10}$-arylène, qui est éventuellement substitué par 1, 2 ou 3 halogènes, des groupes $C_1$- à $C_6$-alkyle, ester ou alcoxy et
D -$NH_2$, -$NHR^3$, -OH, -SH ou un élément structurel -X-$R^2$ $(-Y)_\pi$ avec la signification indiquée dans la formule (I),

est polymérisé radicalairement en utilisant un initiateur de polymérisation.

**2.** Procédé selon la revendication 1, **caractérisé en ce que** les composés a) sont des composés acryliques ou méthacryliques de formule générale (I)

$$H_2C=CR^1-C\,(=O)\,-X-R^2\,(-Y)_\pi \qquad (I),$$

dans laquelle les substituants et indices ont la signification suivante :

$R^1$ -H, -$CH_3$,
X -O-, -NH-, -$NR^3$- ou -S-,
$R^3$ un radical $C_1$- à $C_6$-alkyle linéaire ou ramifié,
$R^2$ un groupe $C_1$- à $C_{12}$-alkyle linéaire ou ramifié, éventuellement substitué, à liaison $(\pi+1)$ ou
un groupe $C_3$- à $C_{12}$-cycloalkyle éventuellement substitué, à liaison $(\pi+1)$ ou
un radical $C_6$- à $C_{10}$-aryle éventuellement substitué, à liaison $(\pi+1)$,
Y -OH, -$NH_2$, -$NHR^3$ ou -SH,
n un nombre de 1 à 5,

l'élément structurel -$R^2(-Y)_\Pi$ de la formule (I) pouvant aussi être un groupe de formule générale (II), (III) ou (IV)

$$- (EO)_k\text{-}(PO)_l\text{-}H \qquad (II),$$

$$-(PO)_l\text{-}(EO)_k\text{-}H \qquad (III),$$

$$- (EO_k/PO_l)\text{-}H \qquad (IV),$$

dans lesquelles EO désigne un groupe -$CH_2$-$CH_2$-O,
PO désigne un groupe -$CH_2$-CH $(CH_3)$ -O- ou un groupe -$CH(CH_3)$-$CH_2$-O et k et l désignent un nombre de 0 à 15,
k et 1 ne désignant pas 0 simultanément.

**3.** Procédé selon l'une des revendications 1 ou 2, **caractérisé en ce que** les composés b) sont des composés de formule générale (V)

$$Q\,(\text{-NCO})_\lambda \qquad (V)$$

dans laquelle Q
est un composé alcane $C_3$ à $C_{16}$ linéaire ou ramifié qui est éventuellement substitué par 1, 2 ou 3 halogènes, des groupes oxo, ester ou alcoxy ou
un composé $C_6$- à $C_{14}$-aromatique qui est éventuellement substitué par 1, 2 ou 3 halogènes, des groupes $C_1$- à $C_6$-alkyle, oxo, ester ou alcoxy ou
un composé $C_3$- à $C_{16}$-cycloalcane qui est éventuellement substitué par 1, 2 ou 3 halogènes, des groupes $C_1$- à $C_6$-alkyle, oxo, ester ou alcoxy ou
un composé arylalkyle avec 6 à 10 atomes C dans le groupe aryle et 1 à 6 atomes C dans le groupe alkyle qui sont éventuellement substitués par 1, 2 ou 3 halogènes, des groupes oxo, ester ou alcoxy,
et $\lambda$ est un nombre $\geq 2$.

**4.** Procédé selon l'une des revendications 2 à 3, **caractérisé en ce que**, dans le composé a), Y est égal à -OH et $\pi$ est égal à 1, dans le composé b), $\lambda$ est égal à 2 et, dans le composé c), A désigne un radical méthyle ou phényle, B est égal à un radical 1,4-phénylène et D est égal à O-$CH_2CH_2$-OH.

**5.** Procédé selon l'une des revendications 2 à 4, **caractérisé en ce que** le rapport du nombre molaire du composé b) au produit du nombre molaire du composé a) et du nombre $\pi$ s'élève de 0,8 à 1 à 1 à 0,8.

**6.** Copolymères obtenus selon un procédé conforme à l'une des revendications 1 à 5.

**7.** Copolymères selon la revendication 6 avec une température de transition vitreuse de -70 à +150°C.

**8.** Utilisation des copolymères selon l'une des revendications 6 ou 7 comme liant ou adhésif durcissable aux UV.

**9.** Utilisation de copolymères selon l'une des revendications 6 ou 7 comme masse autoadhésive, en particulier comme autoadhésif par fusion.